# FASCICULE DE BREVET EUROPEEN

(11) **EP 0 582 522 B1**
(45) Date de publication et mention de la délivrance du brevet: **13.03.1996**
(21) Numéro de dépôt: 93402013.2
(22) Date de dépôt: 04.08.1993
(51) Int. Cl.: B64D 27/26, B64D 33/02, F02C 7/04

(54) **Dispositif d'accrochage d'une turbomachine sur une structure d'aéronef**
Triebwerkaufhängung an Luftfahrzeugstruktur
Mounting device of a turbine engine on an aircraft structure

(30) Priorité: 06.08.1992 FR 9209777
(43) Date de publication de la demande: 09.02.1994
(73) Titulaire: AEROSPATIALE Société Nationale Industrielle, F-75781 Paris Cédex 16 (FR)
(72) Inventeur: Durand, Yves, F-31840 Aussonne (FR)
(74) Mandataire: Poulin, Gérard

(56) Documents cités:
- GB-A- 1 015 162
- GB-A- 1 302 228
- US-A- 2 604 278

## Description

L'invention concerne un dispositif conçu pour assurer l'accrochage d'une turbomachine comportant un corps central avant non rotatif sur une structure telle qu'une voilure d'un aéronef.

Bien qu'il puisse être utilisé sur tous les types d'avions, le dispositif d'accrochage selon l'invention procure des avantages qui sont particulièrement notables lorsqu'il est utilisé sur des avions supersoniques.

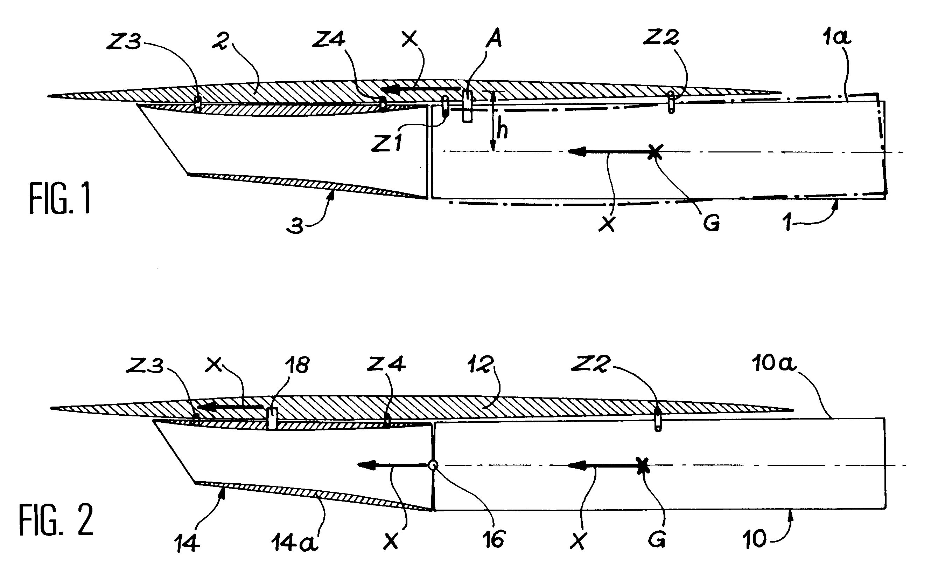

Comme l'illustre schématiquement la vue de côté de la figure 1, l'accrochage d'une turbomachine 1 sur la voilure 2 d'un avion est réalisé traditionnellement par des dispositifs implantés en totalité entre le carter externe 1.a de la turbomachine 1 et la voilure 2.

De façon plus précise, la suspension d'une turbomachine 1 à la voilure 2 d'un avion est habituellement réalisée par deux groupes de manilles à rotules sensiblement verticales, articulées sur le carter externe de la turbomachine en des emplacements Z₁ et Z₂ situés respectivement à proximité de l'extrémité avant de la turbomachine et en arrière du centre de gravité G de celle-ci.

Par ailleurs, la transmission de la poussée X de la turbomachine à la voilure 2 s'effectue en un emplacement A situé légèrement en arrière de l'emplacement Z₁ mais très en avant du centre de gravité G. Selon le cas, cette transmission peut être assurée soit par une rotule horizontale montée dans la partie supérieure centrale du carter externe de la turbomachine 1 et dans laquelle pénètre un arbre vertical solidaire de la voilure 2, soit par deux bielles obliques dont les extrémités sont articulées respectivement sur la voilure 2 et de part et d'autre du carter 1.a de la turbomachine.

Lorsqu'une entrée d'air 3 se trouve placée à l'avant de la turbomachine 1 comme on l'a représenté schématiquement sur la figure 1, cette entrée d'air est également reliée à la voilure 2, en deux emplacements Z₃ et Z₄ éloignés axialement l'un de l'autre, par deux groupes de manilles à rotules sensiblement verticales. Ces dispositifs de suspension de la turbomachine 1 et de l'entrée d'air 3 sont habituellement complétés par une ou plusieurs manilles à rotules sensiblement horizontales, situées par exemple aux emplacements Z₂ et Z₄.

Comme l'illustre très clairement la figure 1, la transmission de la poussée X à la voilure 2 (emplacement A) au travers du carter externe 1.a de la turbomachine 1 se traduit par l'application sur ce carter 1.a d'un moment de flexion égal au produit de la poussée X par la distance h séparant l'axe longitudinal de la turbomachine 1 du point de la voilure 2 par lequel la poussée est appliquée sur cette dernière. Ce moment de flexion entraîne des déformations du carter externe 1.a qui doivent être prises en compte par le concepteur de la turbomachine lors du calcul du jeu entre les extrémités des aubes de rotor (non représentées) et le carter externe 1.a. Plus précisément, l'existence de ce moment de flexion nécessite de donner à ce jeu une valeur minimale relativement élevée, qui ne permet pas d'optimiser au mieux les performances de la turbomachine.

Par ailleurs, la voilure d'un avion doit pouvoir se déformer librement au cours du vol et cela d'autant plus lorsqu'elle est très effilée et très souple comme c'est le cas de la voilure d'un avion supersonique. Lorsque des dispositifs d'accrochage classiques sont utilisés, les turbomachines 1 équipées de leurs entrées d'air 3 ont tendance, du fait de leur raideur, à induire des surcontraintes qui s'opposent à la libre déformation de la voilure.

Dans le cas des avions actuels, il a été partiellement remédié à ce dernier inconvénient en supprimant toute connexion entre la turbomachine 1 et son entrée d'air 3 et en accrochant ces deux appareils indépendamment l'un de l'autre à la voilure 2 comme l'illustre la figure 1. Cependant, cette solution ne supprime pas le problème posé par le moment de flexion induit par la transmission de la poussée à la voilure au travers du carter externe de la turbomachine. De plus, l'absence de toute liaison entre cette dernière et son entrée d'air fait que le jeu existant entre ces deux appareils n'est limité que par la flexion de la voilure. Par conséquent, des risques de pompage de la turbomachine peuvent apparaître si ce jeu dépasse une certaine valeur. Un joint de mouvement reliant la face arrière de l'entrée d'air et la face avant du moteur est nécessaire.

La présente invention a précisément pour objet un dispositif permettant de transmettre à une structure d'aéronef telle qu'une voilure la poussée d'une turbomachine sans passer par le carter externe de cette dernière et d'une manière telle qu'aucun moment de flexion n'est induit dans ce carter (ce qui permet d'optimiser les performances de la turbomachine en donnant au jeu entre les aubes de rotor et le carter externe une valeur minimale) et que la structure de l'aéronef peut se déformer librement, sans entraîner pour autant un risque de pompage de la turbomachine, moyennant le montage d'un, joint d'étanchéité dont la seule fonction est de préserver la continuité de la veine d'air.

Conformément à l'invention, ce résultat est obtenu au moyen d'un dispositif d'accrochage d'une turbomachine à corps central avant non rotatif sur une structure d'aéronef, caractérisé par le fait qu'il comprend un organe de transmission de poussée, accroché à ladite structure à l'avant de la turbomachine et séparément de cette dernière, et une rotule de transmission de poussée, reliant une extrémité avant du corps central à l'organe de transmission de poussée selon un axe longitudinal de la turbomachine.

En plus des résultats énoncés précédemment, un tel dispositif d'accrochage permet de supprimer tous les éléments qui relient la partie avant du carter externe de la turbomachine à la voilure dans les dispositifs d'accrochage existants. L'espace ainsi disponible permet d'implanter les systèmes et accessoires environnants de façon plus compacte.

Dans un mode de réalisation préféré de l'invention, l'organe de transmission de poussée est une entrée d'air comportant un carter extérieur relié à ladite rotule par une structure rigide et relié à la structure d'aéronef par des moyens de transmission de poussée.

Ces moyens de transmission de poussée comprennent avantageusement une rotule horizontale montée dans une partie supérieure centrale du carter extérieur de l'entrée d'air, et percée d'un alésage dans lequel est reçu un arbre solidaire de la structure d'aéronef.

Le carter extérieur de l'entrée d'air peut notamment être relié à la structure d'aéronef, dans un même plan radial de l'entrée d'air proche de la turbomachine, par deux manilles à rotules sensiblement verticales et par une manille à rotules sensiblement horizontale, et, à proximité d'une extrémité avant de l'entrée d'air, par une manille à rotules sensiblement verticale.

De façon comparable, le carter externe de la turbomachine peut notamment être reliée directement à la structure d'aéronef, dans un même plan radial de la turbomachine, par deux manilles à rotules sensiblement verticales et par une manille à rotules sensiblement horizontale. Il est à noter que ces manilles ont seulement pour fonction de suspendre la turbomachine à la structure d'aéronef et ne participent aucunement à la transmission à cette structure de la poussée de la turbomachine.

Pour faciliter la dépose de la turbomachine et, le cas échéant, de l'entrée d'air, des moyens de raccordement déconnectables sont avantageusement associés à la rotule, entre l'extrémité avant du corps central de la turbomachine et l'organe de transmission de poussée.

Ces moyens de raccordement déconnectables comprennent notamment des moyens de crabotage interposés entre la rotule et l'extrémité avant du corps central de la turbomachine. Des moyens de verrouillage de ces moyens de crabotage dans un état raccordé sont également prévus.

Pour faciliter le raccordement, des moyens de translation sont prévus pour déplacer la rotule selon un axe sensiblement aligné avec l'axe longitudinal de la turbomachine, entre une position d'assemblage et une position de démontage. Dans la position d'assemblage, le jeu maximum pouvant exister entre le carter extérieur de l'entrée d'air et le carter externe de la turbomachine ne peut en aucun cas dépasser une valeur prédéterminée. Les risques de pompage de la turbomachine sont ainsi évités et la conception de joint d'étanchéité de la veine d'air facilitée.

En outre un système déverrouillable empêche de préférence un actionnement des moyens de translation lorsqu'ils occupent leur position d'assemblage.

On décrira à présent, à titre d'exemple non limitatif, un mode de réalisation préféré de l'invention, en se référant aux dessins annexés, dans lesquels :
- la figure 1, déjà décrite, est une vue de côté, en coupe partielle, illustrant de façon très schématique l'accrochage d'une turbomachine sous la voilure d'un avion par les techniques actuelles ;
- la figure 2 est une vue comparable à la figure 1 illustrant l'accrochage d'une turbomachine sous la voilure d'un avion à l'aide d'un dispositif d'accrochage conforme à l'invention ;
- la figure 3 est une vue en perspective représentant plus en détail une turbomachine et son entrée d'air et mettant l'accent sur les organes par lesquels ces deux appareils sont suspendus à la voilure et par lesquels la poussée de la turbomachine est transmise à la voilure ;
- la figure 4 est une vue en coupe longitudinale, selon un plan vertical, montrant plus en détail la rotule servant à transmettre la poussée de la turbomachine au travers de la structure de l'entrée d'air, ainsi que les mécanismes facilitant la dépose séparée de la turbomachine et de l'entrée d'air ;
- la figure 5 est une vue en perspective et en coupe partielle, représentant plus précisément les moyens de crabotage reliant normalement la partie arrière de l'entrée d'air et la partie avant de la turbomachine ; et
- la figure 6 est une vue en perspective illustrant à plus grande échelle une partie des moyens de crabotage permettant d'assurer la dépose séparée de la turbomachine et de l'entrée d'air.

Comme l'illustre très schématiquement la figure 2, l'accrochage d'une turbomachine 10 sous la voilure 12 d'un avion s'effectue conformément à l'invention d'une manière telle que la poussée X qui s'exerce sur le centre de gravité G de la turbomachine selon l'axe longitudinal de celle-ci soit transmise selon cet axe longitudinal à un organe de transmission de poussée constitué dans ce cas par une entrée d'air 14 placée en avant de la turbomachine, avant d'être transmise à la voilure 12.

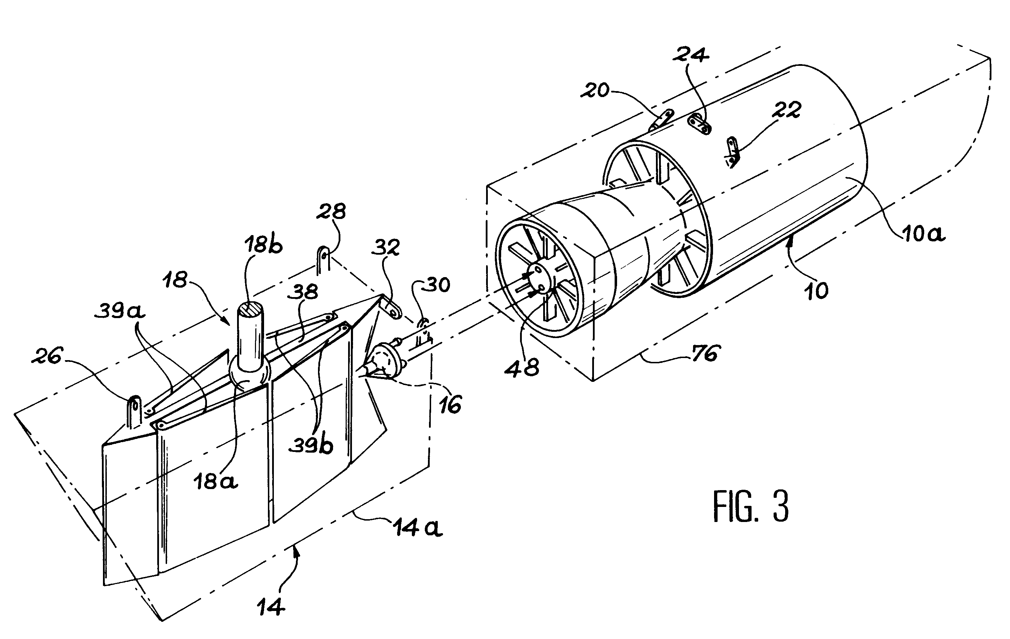

De façon plus précise, la turbomachine 10 comporte dans ce cas un corps central avant non rotatif 48 (figures 3 à 5), dont l'extrémité avant est reliée à l'entrée d'air 14 par une rotule de transmission de poussée 16. La poussée X de la turbomachine est d'abord transmise à l'entrée d'air 14 par la rotule 16, selon l'axe de la turbomachine, avant d'être transmise de l'entrée d'air 14 à la voilure 12 par des moyens de transmission de poussée 18. Comme l'illustre la figure 3, ces moyens de transmission de poussée 18 comprennent par exemple une rotule horizontale 18a montée dans une partie supérieure centrale du carter extérieur 14a de l'entrée d'air 14, ainsi qu'un arbre vertical 18b solidaire de la voilure 12 et pénétrant dans un alésage sensiblement vertical formé dans la rotule horizontale 18a.

Grâce à cet agencement, aucun moment de flexion n'est induit dans la turbomachine 10 par la poussée X, de sorte que le jeu entre les extrémités des aubes de rotor de la turbomachine et son carter externe peut être sensiblement réduit par rapport aux dispositifs d'accrochage existants, afin d'optimiser les performances de la turbomachine.

Par ailleurs, la rotule 16 constitue entre l'entrée d'air 14 et la turbomachine 10 une liaison qui autorise une déformation pratiquement libre de la voilure 12, tout en limitant à une valeur maximale connue le jeu qui peut exister entre l'entrée d'air et la turbomachine. Les risques de pompage de cette dernière s'en trouvent ainsi minimisés.

En dehors des éléments déjà décrits, qui concernent la transmission des efforts de poussée entre la turbomachine 10 et la voilure 12, le dispositif d'accrochage conforme à l'invention comprend un certain nombre de manilles à rotules qui sont situées en un emplacement Z₂ (figure 2), légèrement en arrière du centre de gravité G, pour ce qui concerne la turbomachine 10, et en des emplacements Z₃ et Z₄ situés à proximité des extrémités avant et arrière de l'entrée d'air 14, pour ce qui concerne cette dernière. L'agencement de ces manilles à rotules va à présent être décrit plus en détail en se référant à la figure 3.

En ce qui concerne tout d'abord les manilles à rotules situées à l'emplacement Z₂, elles comprennent deux manilles à rotules sensiblement verticales 20 et 22 disposées de façon sensiblement symétrique par rapport à un plan vertical passant par l'axe longitudinal de la turbomachine. Les extrémités supérieures de ces manilles 20 et 22 sont accrochées par des rotules sous la voilure 12, alors que leurs extrémités inférieures sont accrochées par des rotules sur le carter externe 10a de la turbomachine 10. Entre ces manilles à rotules sensiblement verticales 20 et 22 est disposée une manille à rotules sensiblement horizontale 24 dont une extrémité est reliée par une rotule à la voilure 12 et dont l'extrémité opposée est reliée par une autre rotule à la partie supérieure du carter externe 10a. Il est à noter que les trois manilles 20, 22 et 24 constituent la seule liaison directe entre le carter externe 10a de la turbomachine 10 et la voilure 12 et qu'elles ne participent pas à la transmission des efforts de poussée.

En ce qui concerne les liaisons entre l'entrée d'air 14 et la voilure 12, elles comportent à l'emplacement Z₃ une seule manille à rotules 26 sensiblement verticale, dont l'extrémité supérieure est accrochée par une rotule sous la voilure 12 et dont l'extrémité inférieure est reliée par une rotule à la partie supérieure du carter extérieur 14a de l'entrée d'air 14.

Enfin, à l'emplacement Z₄, la liaison entre le carter extérieur 14a de l'entrée d'air 14 et la voilure 12 comporte deux manilles à rotules sensiblement verticales 28 et 30, situées en des emplacements symétriques par rapport à un plan vertical passant par l'axe longitudinal de l'entrée d'air, ainsi qu'une manille à rotules sensiblement horizontale 32 placée entre les manilles à rotules 28 et 30.

De façon plus précise, les extrémités supérieures des manilles à rotules sensiblement verticales 28 et 30 sont accrochées sous la voilure 12 par des rotules et les extrémités inférieures de ces mêmes manilles sont reliées au carter extérieur 14a de l'entrée d'air 14 par des rotules. La manille à rotules sensiblement horizontale 32 est également reliée par ses extrémités, au travers de deux rotules, respectivement à la voilure 12 et à la partie supérieure du carter extérieur 14a.

Dans l'exemple de réalisation illustrée sur la figure 3, l'entrée d'air 14 comprend, à l'intérieur du carter extérieur 14a, une cloison verticale 38 passant par l'axe longitudinal de l'entrée d'air et fixée sur le carter. Des rampes mobiles 39a, 39b sont articulées par des axes verticaux à proximité des extrémités avant et arrière de la cloison 38, pour former à l'intérieur du carter 14a un canal d'écoulement d'air convergent-divergent à col réglable.

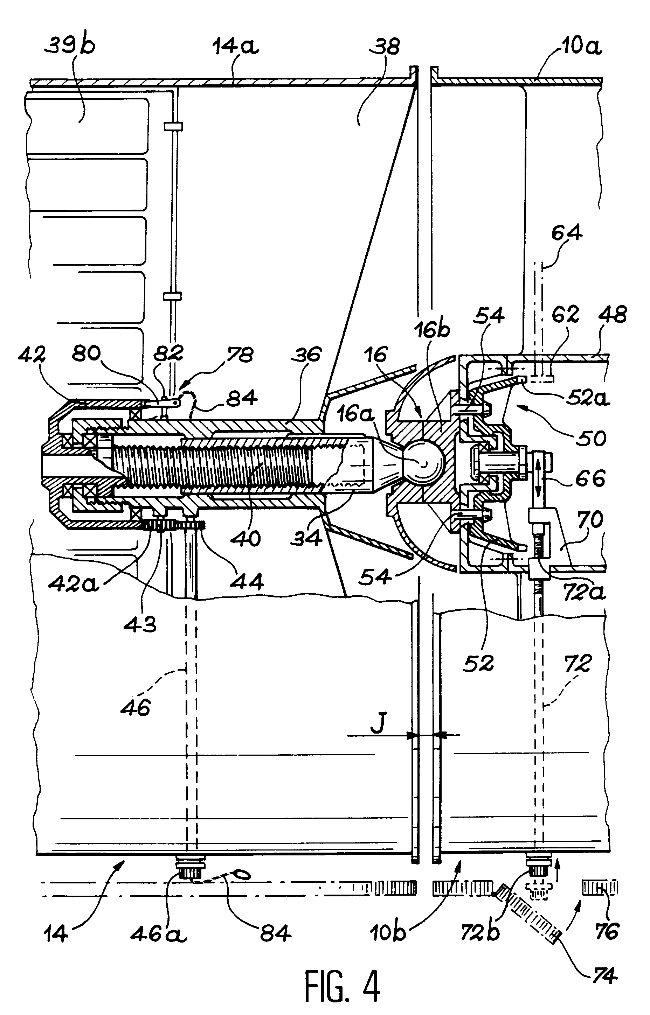

On décrira à présent en détail les moyens de raccordement déconnectables qui sont associés à la rotule de transmission de poussée 18, afin de permettre un démontage séparé de la turbomachine 10 et/ou de l'entrée d'air 14 lors des opérations de maintenance. Pour cela, on se réfèrera aux figures 4 à 6.

La rotule de transmission de poussée 16 comporte une partie mâle 16a qui est fixée à l'extrémité arrière d'un écrou 34 prévu pour être sensiblement aligné sur l'axe longitudinal de la turbomachine 10. Cet écrou 34 est reçu de façon coulissante dans un manchon support 36 définissant l'axe longitudinal de l'entrée d'air 14 et qui est relié au carter extérieur 14a de l'entrée d'air par la cloison verticale 38. Le montage de l'écrou 34 dans le manchon 36 est tel que l'écrou peut coulisser axialement dans le manchon tout en étant immobilisé en rotation.

Une tige filetée 40 est vissée dans l'écrou 34 et solidaire, du côté opposé à la rotule 16, d'une cloche 42 dont le rebord est pourvu d'une denture 42a. Sur cette denture 42a est engrené un pignon 43, dont l'axe orienté radialement est supporté par le manchon support 36. Un pignon 44, fixé à l'extrémité d'une tige de commande 46 supportée par la cloison 38 et orientée radialement, est lui-même engrené sur le pignon 43. Une extrémité 46a de la tige de commande 46, située à l'extérieur du carter 14a, permet de commander la translation de la rotule 16 entre une position d'assemblage et une position de démontage. Dans la position d'assemblage de la rotule 16 illustrée sur la figure 1, il existe entre le carter extérieur 14a de l'entrée d'air 14 et le carter externe 10a de la turbomachine 10 un jeu axial limité J, lorsque ces deux carters sont alignés. Une déformation de la voilure à laquelle sont suspendues séparément l'entrée d'air et la turbomachine ne peut produire, par conséquent, qu'un jeu maximal égal au double du jeu J, insuffisant pour entraîner un pompagede la turbomachine en présence du joint d'étanchéité (non représenté) préservant la continuité de la veine d'air.

De préférence, un déplacement axial de la rotule 16 en éloignement de sa position d'assemblage illustrée sur la figure 4 est normalement empêché par un système de sécurité illustré schématiquement en 78. Ce système de sécurité 78 comprend un cliquet 80 articulé sur le manchon support 36 par un axe radial 82. Le cliquet 80 est normalement en prise sur une roue à cliquet solidaire de la cloche 42 ou de la tige filetée 40. Cette roue à cliquet peut notamment être constituée par la denture 42a. Le cliquet 80 peut être écarté de la roue à cliquet en exerçant une traction sur un câble 84 accessible depuis l'extérieur du carter 14a et cheminant par exemple à l'intérieur de l'arbre de commande 46 qui est alors un arbre creux.

Lorsque la rotule 16 occupe sa position de démontage, elle est déplacée vers l'arrière, c'est-à-dire vers la droite en considérant la figure 4, sur une distance prédéterminée, de façon à faciliter l'emboîtement de moyens de crabotage 50 qui sont prévus entre la rotule 16 et l'extrémité avant du corps central avant non rotatif 48 de la turbomachine 10. Ces moyens de crabotage vont à présent être décrits en détail en se référant aux figures 4 à 6.

Les moyens de crabotage 50, sont prévus entre une partie femelle 16b de la rotule 16 de transmission de poussée et un plateau rotatif 52 monté dans le corps central avant 48, de façon à pouvoir tourner autour de l'axe longitudinal de la turbomachine 10.

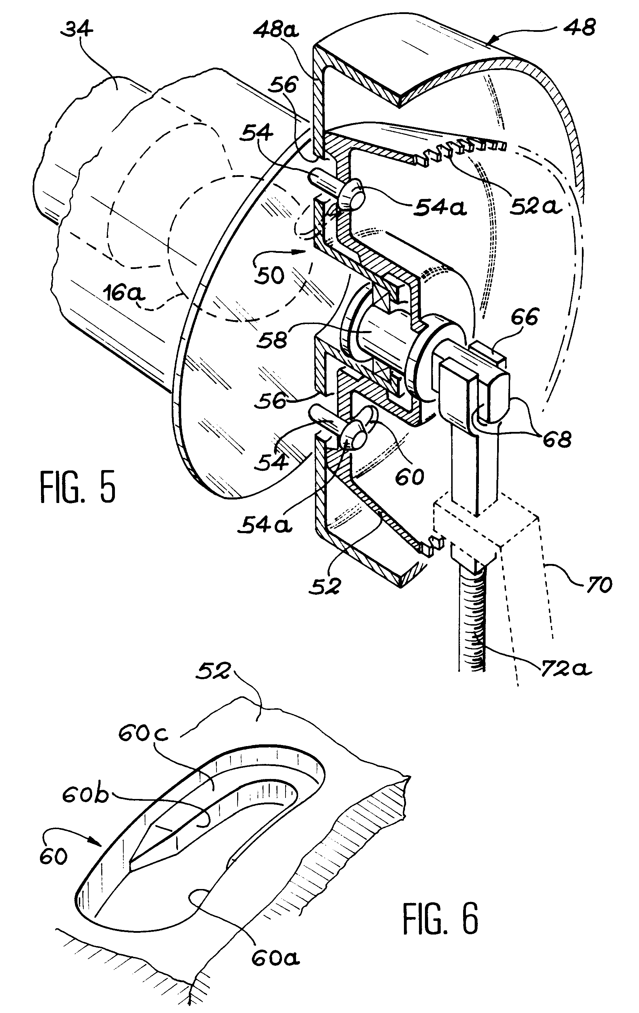

De façon plus précise, la partie femelle 16b de la rotule 16 de transmission de poussée porte sur sa face arrière tournée vers la turbomachine au moins deux pions de crabotage 54 qui font saillie parallèlement à l'axe du manchon de guidage 36 en des emplacements diamétralement opposés par rapport à cet axe. Chacun des pions de crabotage 54 est terminé par une collerette d'appui 54a (figure 5).

Les pions de crabotage 54 ainsi que leurs collerettes d'extrémité 54a traversent librement des ouvertures en arcs de cercle 56 formées dans une paroi 48a constituant la face avant du corps central 48. Dans sa partie centrale, cette paroi 48a supporte de façon rotative un axe 58, disposé selon l'axe géométrique de la turbomachine 10 et sur lequel est fixé le plateau tournant 52.

Ce plateau tournant 52 est situé immédiatement derrière la paroi 48a et il comporte en face des ouvertures en arcs de cercle 56 des fentes de crabotage 60 dont l'une est représentée en détail sur la figure 6. Chacune des fentes de crabotage 60 est une fente en arc de cercle centrée sur l'axe géométrique de la turbomachine et comportant une extrémité de grande largeur 60a, que peut traverser la collerette d'extrémité 54a du pion de crabotage 54 correspondant, et une extrémité de plus faible largeur 60b, autorisant le passage des pions de crabotage 54 tout en interdisant la traversée de leurs collerettes d'extrémité 54a.

Grâce à l'agencement qui vient d'être décrit, l'entrée d'air 14 et la turbomachine 10 peuvent être solidarisées ou désolidarisées l'une de l'autre par déplacement axial lorsque les pions de crabotage 54 se trouvent en face des extrémités de grande largeur 60a des fentes de crabotage 60 alors que tout mouvement axial relatif entre les deux appareils est impossible lorsque les pions de crabotage 54 traversent les extrémités de faible largeur 60b des fentes de crabotage. Dans ce dernier cas, les collerettes d'extrémité 54a des pions de crabotage sont en effet en appui contre des surfaces 60c du plateau 52 adjacentes aux extrémités de faible largeur 60b des fentes de crabotage.

La commutation des moyens de crabotage 50 entre la première position autorisant la désolidarisation de l'entrée d'air 14 et de la turbomachine 10 et la deuxième position assurant la solidarisation de ces deux appareils est assurée par une rotation du plateau 52. Pour commander cette rotation, le plateau 52 comporte une couronne dentée 52a sur laquelle est engrené au moins un pignon 62 (figure 4) fixé à l'extrémité d'un arbre de commande 64 des moyens de crabotage 50. Cet arbre de commande 64 s'étend radialement entre le corps central avant 48 et le carter externe 10a de la turbomachine 10, de façon à pouvoir être entraîné en rotation depuis l'extérieur du carter 10a par un outillage simple (clef à douille standard). Deux arbres de commande 64 diamétralement opposés et orientés horizontalement peuvent notamment être prévus, chacun de ces arbres portant à son extrémité un pignon 62 en prise sur la couronne dentée 52a.

Afin d'éviter un désaccouplement accidentel des moyens de crabotage 50, des moyens de verrouillage ou de blocage sont associés à ces derniers pour en assurer normalement le maintien dans un état raccordé qui correspond à la solidarisation de l'entrée d'air 14 et de la turbomachine 10.

Comme l'illustrent notamment les figures 4 et 5, ces moyens de verrouillage comprennent une fourchette 66 montée dans le corps central avant 48 de façon à pouvoir se déplacer selon une direction radiale entre une position externe autorisant un actionnement des moyens de crabotage 50 et une position interne, illustrée sur les figures 4 et 5, dans laquelle la fourchette 66 est en prise sur des méplats 68 formés à l'extrémité arrière de l'axe 58, de façon à empêcher toute rotation de ce dernier. Dans cette dernière position, le plateau 52 occupe une position angulaire telle que les pions de crabotage 54 se trouvent situés dans les extrémités de faible largeur 60b des fentes de crabotage 60. Tout actionnement des moyens de crabotage 50 visant à désolidariser l'entrée d'air 14 de la turbomachine 10 est alors impossible.

La fourchette 66 est supportée et guidée dans son déplacement radial par un support 70 fixé à l'intérieur du corps central avant 48.

La commande du déplacement radial de la fourchette 66 est assurée par un arbre de commande 72 qui traverse radialement le corps central avant 48 et le carter externe 10a de la turbomachine et dont l'extrémité adjacente à la fourchette 66 est solidaire de cette dernière en translation et comporte un filetage 72a vissé dans le support 70. L'extrémité 72b de l'arbre de commande 72 située à l'extérieur du carter externe 10a permet de commander la rotation de l'arbre 72 à l'aide d'un outillage approprié. Sous l'effet de cette rotation, l'arbre de commande 72 se déplace radialement dans un sens ou dans l'autre par suite de la coopération de son filetage 72a avec le support 70. Les déplacements radiaux de la fourchette 66 sont ainsi obtenus.

Il est à noter que l'extrémité 72b de l'arbre de commande 72 empêche la fermeture d'une trappe 74 formée sur un carénage extérieur 76 de la turbomachine tant que la fourchette 66 ne chevauche pas complètement les méplats 68 de l'axe 58. Cette caractéristique constitue une sécurité visuelle pour le personnel de maintenance.

Le mode de réalisation qui vient d'être décrit en détail en se référant aux figures 2 à 6 peut subir différentes variantes sans sortir du cadre de l'invention. Ainsi, l'organe situé à l'avant de la turbomachine et au travers duquel la poussée exercée axialement par la turbomachine est transmise à la structure de l'aéronef peut être un organe prévu uniquement à cet effet et ne faisant pas partie d'une entrée d'air. Par ailleurs, si la structure de l'aéronef supportant la turbomachine est généralement une voilure d'avion, il peut aussi s'agir d'un autre élément de structure tel que la cellule d'un aéronef.

En ce qui concerne la transmission de la poussée entre l'organe placé à l'avant de la turbomachine et la structure de l'aéronef assurant le supportage de cette dernière, elle peut être réalisée d'une manière différente de celle qui a été décrite, par exemple au moyen de toute liaison de type rotulaire éliminant les degrés de liberté en translation X, Y et Z et permettant toutes les rotations Rₓ, R_{y} et R_{z}. De façon comparable, les moyens qui ont été décrits pour suspendre la turbomachine et l'entrée d'air à la voilure peuvent aussi prendre des formes différentes, notamment si l'organe de transmission de poussée n'est pas une entrée d'air et si la structure de l'aéronef qui supporte la turbomachine n'est pas une voilure d'avion.

## Revendications

1. Dispositif d'accrochage d'une turbomachine (10) à corps central (48) avant non rotatif sur une structure (12) d'aéronef, caractérisé par le fait qu'il comprend un organe de transmission de poussée (14), accroché à ladite structure (12) à l'avant de la turbomachine (10) et séparément de cette dernière, et une rotule (16) de transmission de poussée, reliant une extrémité avant du corps central (48) à l'organe de transmission de poussée (14) selon un axe longitudinal de la turbomachine.

2. Dispositif selon la revendication 1, caractérisé par le fait que l'organe de transmission de poussée est une entrée d'air (14) comportant un carter extérieur (14a) relié à ladite rotule (16) par une structure rigide (38) et relié à ladite structure d'aéronef (12) par des moyens de transmission de poussée (18).

3. Dispositif selon la revendication 2, caractérisé par le fait que les moyens de transmission de poussée (18) comprennent une rotule horizontale (18a) montée dans une partie supérieure centrale du carter extérieur (14a), percée d'un alésage dans lequel est reçu un arbre (18b) solidaire de la structure d'aéronef (12).

4. Dispositif selon l'une quelconque des revendications 2 et 3, caractérisé par le fait que le carter extérieur (14a) de l'entrée d'air (14) est relié à la structure d'aéronef (12), dans un même plan radial de l'entrée d'air proche de la turbomachine, par deux manilles à rotules (28,30) sensiblement verticales et par une manille à rotules (32) sensiblement horizontale, et, à proximité d'une extrémité avant de l'entrée d'air, par une manille à rotules (26) sensiblement verticale.

5. Dispositif selon l'une quelconque des revendications précédentes, caractérisé par le fait que, la turbomachine (10) comportant un carter externe (10a), ce dernier est relié directement à la structure d'aéronef (12), dans un même plan radial de la turbomachine, par deux manilles à rotules (20,22) sensiblement verticales et par une manille à rotules (24) sensiblement horizontale.

6. Dispositif selon l'une quelconque des revendications précédentes, caractérisé par le fait que des moyens de raccordement déconnectables (50) sont associés à ladite rotule (16), entre l'extrémité avant du corps central (48) de la turbomachine et l'organe de transmission de poussée (14).

7. Dispositif selon la revendication 6, caractérisé par le fait que les moyens de raccordement déconnectables comprennent des moyens de crabotage (50) interposés entre la rotule (16) et l'extrémité avant du corps central (48) de la turbomachine.

8. Dispositif selon la revendication 7, caractérisé par le fait qu'il comprend des moyens de verrouillage (66) des moyens de crabotage (50) dans un état raccordé.

9. Dispositif selon l'une quelconque des revendications 7 et 8, caractérisé par le fait qu'il comprend des moyens de translation (34,40) pour déplacer la rotule (16) selon un axe sensiblement aligné avec l'axe longitudinal de la turbomachine, entre une position d'assemblage et une position de démontage.

10. Dispositif selon la revendication 9, caractérisé par le fait qu'il comprend un système de sécurité (78) déverrouillable empêchant normalement un actionnement des moyens de translation (34,40) lorsqu'ils occupent leur position d'assemblage.

## Claims

1. Device for attaching a turbojet engine (10) having a front, central, non-rotary body (48) to an aircraft structure (12), characterized in that the device incorporates a thrust transmission member (14) attached to said structure (12) to the front of the turbojet engine (10) and separately from the latter, and a thrust transmission ball joint (16) connecting a front end of the central body (48) to the thrust transmission member (14) along a longitudinal axis of the turbojet engine.

2. Device according to claim 1, characterized in that the thrust transmission member is an air intake (14) having an outer casing (14a) connected to the ball joint (16) by a rigid structure (38) and connected to the aircraft structure (12) by thrust transmission means (18).

3. Device according to claim 2, characterized in that the thrust transmission means (18) incorporates a horizontal ball joint (18a) fitted in an upper, central part of the outer casing (14a) and traversed by a bore receiving a shaft (18b) integral with the aircraft structure (12).

4. Device according to either of the claims 2 and 3, characterized in that the outer casing (14a) of the air intake (14) is connected to the aircraft structure (12) in a same radial plane of the air intake close to the turbojet engine by means of two substantially vertical ball jointed-equipped shackles (28,30) and by one substantially horizontal ball joint-equipped shackle (32) and, in the vicinity of a front end of the air intake, by one substantially vertical ball joint-equipped shackle (26).

5. Device according to any one of the preceding claims, characterized in that, the turbojet engine (10) having an outer casing (10a), the latter is directly connected to the aircraft structure (12) in the same radial plane of the turbojet engine by two substantially vertical ball joint-equipped shackles (20,22) and by one substantially horizontal ball joint-equipped shackle (24).

6. Device according to any one of the preceding claims, characterized in that disconnectable connecting means (50) are associated with said ball joint (16) between the front end of the central body (48) of the turbojet engine and the thrust transmission member (14).

7. Device according to claim 6, characterized in that the disconnectable connecting means incorporate dog clutch means (50) interposed between the ball joint (16) and the front end of the central body (48) of the turbojet engine.

8. Device according to claim 7, characterized in that it also has means (66) for locking the dog clutch means (50) in a connected state.

9. Device according to either of the claims 7 and 8, characterized in that it has translation means (34,40) for displacing the ball joint (16) along an axis substantially aligned with the longitudinal axis of the turbojet engine, between an assembly position and a disassembly position.

10. Device according to claim 9, characterized in that it has an unlockable security system (78) normally preventing an actuation of the translation means (34,40) when they occupy their assembly position.

## Patentansprüche

1. Vorrichtung zum Aufhängen eines Turbotriebwerks (10) mit nicht rotierendem vorderem Zentralgehäuse (48) an einer Luftfahrzeugstruktur (12), **dadurch gekennzeichnet, daß** sie ein Schubkraftübertragungsorgan (14), das an der Struktur (12) vor dem Turbotriebwerk (10) und getrennt von diesem aufgehängt ist, und ein Kugelgelenk (16) zur Schubkraftübertragung umfaßt, das entlang einer Längsachse des Turbotriebwerks ein vorderes Ende des Zentralgehäuses (48) mit dem Schubkraftübertragungsorgan (14) verbindet.

2. Vorrichtung nach Anspruch 1, **dadurch gekennzeichnet, daß** das Schubkraftübertragungsorgan ein Lufteintritt (14) ist, welcher ein Außengehäuse (14a) umfaßt, das durch eine starre Struktur (38) mit dem Kugelgelenk (16) und durch Schubkraftübertragungsmittel (18) mit der Luftfahrzeugstruktur (12) verbunden ist.

3. Vorrichtung nach Anspruch 2, **dadurch gekennzeichnet, daß** die Schubkraftübertragungsmittel (18) ein horizontalen Kugelgelenk (18a) umfassen, das in einem zentralen oberen Teil des Außengehäuses (14a) befestigt ist und in welchem sich eine Bohrung befindet, die eine mit der Luftfahrzeugstruktur (12) verbundene Welle (18b) aufnimmt.

4. Vorrichtung nach Anspruch 2 oder 3, **dadurch gekennzeichnet, daß** das Außengehäuse (14a) des Lufteintritts (14) in ein und derselben radialen Ebene des Lufteintritts in der Nähe des Turbotriebwerks durch zwei im wesentlichen vertikale Kugelgelenkschäkel (28, 30), einen im wesentlichen horizontalen Kugelgelenkschäkel (32) und in der Nähe eines vorderen Endes des Lufteintritts einen im wesentlichen vertikalen Kugelgelenkschäkel (26) mit der Luftfahrzeugstruktur (12) verbunden ist.

5. Vorrichtung nach einem der vorhergehenden Ansprüche, **dadurch gekennzeichnet**, daß das Turbotriebwerk (10) ein Aussengehäuse (10a) umfaßt, das in ein und derselben radialen Ebene des Turbotriebwerks durch zwei im wesentlichen vertikale Kugelgelenkschäkel (20, 22) und einen im wesentlichen horizontalen Kugelgelenkschäkel (24) direkt mit der Luftfahrzeugstruktur (12) verbunden ist.

6. Vorrichtung nach einem der vorhergehenden Ansprüche, **dadurch gekennzeichnet, daß** zwischen dem vorderen Ende des Zentralgehäuses (48) des Turbotriebwerks und dein Schubkraftübertragungsorgan (14) lösbare Verbindungsmittel (50) mit dem Kugelgelenk (16) verbunden sind.

7. Vorrichtung nach Anspruch 6, **dadurch gekennzeichnet, daß** die lösbaren Verbindungsmittel Klauenkupplungsmittel (50) umfassen, die zwischen dem Kugelgelenk (16) und dem vorderen Ende des Zentralgehäuses (48) des Turbotriebwerks angeordnet sind.

8. Vorrichtung nach Anspruch 7, **dadurch gekennzeichnet, daß** sie für die Klauenkupplungsmittel (50) im Verbindungszustand Verriegelungsmittel (66) umfaßt.

9. Vorrichtung nach Anspruch 7 oder 8, **dadurch gekennzeichnet, daß** sie Translationsmittel (34, 40) umfaßt, die das Kugelgelenk (16) zwischen einer Verbindungsposition und einer gelösten Position entlang einer Achse bewegen, die im wesentlichen nach der Längsachse des Turbotriebwerks ausgerichtet ist.

10. Vorrichtung nach Anspruch 9, **dadurch gekennzeichnet, daß** sie ein entriegelbares Sicherheitssystem (78) umfaßt, das normalerweise eine Betätigung der Translationsmittel (34, 40) verhindert, wenn diese ihre Verbindungsposition eingenommen haben.
